# EUROPEAN PATENT APPLICATION

(11) **EP 4 130 351 A1**
(43) Date of publication of application: **08.02.2023**
(21) Application number: 22185725.3
(22) Date of filing: 19.07.2022
(51) Int. Cl.: D01D 5/096, D01D 13/02, D02J 1/08, D01H 13/30

(54) **YARN PROCESSING MECHANISM AND SPUN YARN TAKE-UP APPARATUS**

(30) Priority: 05.08.2021 JP 2021129295
(71) Applicant: TMT Machinery, Inc., Osaka-shi, Osaka 541-0041 (JP)
(72) Inventor: Mizutani, Mitsunori, Kyoto-shi, Kyoto, 612-8686 (JP); Iwaki, Takayuki, Kyoto-shi, Kyoto, 612-8686 (JP)
(74) Representative: Hoffmann Eitle

(57) **Abstract**

A yarn processing mechanism capable of effectively suppressing dispersion of oil mist scattered from a yarn processing apparatus is provided. A cover member 30 in which an exhaust chamber 31 extends in a third direction that is orthogonal to a first direction and a second direction is provided. The exhaust chamber 31 has an inlet 32 formed on an imaginary line L1, L2 extending in a guide direction of the fluid guide portion 23 from a base end of the fluid guide portion 23 and an exhaust port 33 formed at a different position from the inlet 32. An inner wall of the exhaust chamber 31 has curved portions 34 and 35 that are convex outward in the cross section orthogonal to the third direction.

## Description

### BACKGROUND OF THE INVENTION

The present invention relates to a yarn processing mechanism that is capable of suppressing dispersion of oil mist scattered from a yarn processing apparatus configured to perform, by ejecting fluid, a predetermined process for yarns to which oil has been applied, and also relates to a spun yarn take-up apparatus including the yarn processing mechanism.

Traditionally, oil may be applied to yarns in order to, for example, reduce friction, suppress static electricity, improve the package shape, and improve the uniformity of yarn heating. In a yarn processing apparatus configured to perform a predetermined process for a yarn by ejecting fluid into a yarn running space in which yarns with oil thereon run, part of the oil adhered to the yarns is blown by the ejection of the fluid and becomes oil mist. When such oil mist scatters from the yarn processing apparatus, the oil mist may adhere to a resin member and deteriorate the resin member, or the oil mist may adhere to yarns or packages in the form of oil droplets and may deteriorate the yarn quality. For example, as the yarn processing apparatus, an interlacing device and a migration nozzle have been known.

To solve the problem above, for example, Patent Literature 1 (Japanese Laid-Open Patent Publication No. 2017-218706) discloses a technology of guiding a stream ejected from a yarn running space of an interlacing device to a duct member, converting the oil mist into oil droplets by means of a filter provided inside the duct member, and collecting the oil droplets. Meanwhile, Patent Literature 2 (Japanese Laid-Open Patent Publication No. 2017-509810) discloses a technology of sucking floating components such as oil mist generated at an interlacing device.

### SUMMARY OF THE INVENTION

However, when merely a duct member is provided in the vicinity of an interlacing device as in Patent Literature 1, a non-negligible amount of oil mist does not flow into the duct member, with the result that the dispersion of the oil mist cannot be sufficiently suppressed. Meanwhile, when oil mist is collected by sucking as in Patent Literature 2, to what extent the oil mist is collected greatly depends on the capability of a suction device. On this account, the oil mist may scatter when the capability of the suction device is low.

In consideration of the above, an object of the present invention is to provide a yarn processing mechanism capable of effectively suppressing dispersion of oil mist scattered from a yarn processing apparatus.

A yarn processing mechanism of the present invention comprises:
a yarn processing apparatus which includes a yarn processing unit in which at least one yarn running space is formed along a first direction to allow a yarn to which oil has been applied to run through the yarn running space, and which is configured to perform a predetermined process for the yarn by ejecting fluid into the yarn running space;
at least one fluid guide portion which is provided to be spaced apart from the yarn processing unit in the first direction and which extends in a guide direction having a component in a second direction orthogonal to the first direction; and
a cover member in which an exhaust chamber extends in a third direction that is orthogonal to the first direction and the second direction, the exhaust chamber having an inlet formed on an imaginary line extending in the guide direction from a base end of the at least one fluid guide portion and an exhaust port formed at a different position from the inlet,
an inner wall of the exhaust chamber having at least one curved portion which is convex outward in a cross section orthogonal to the third direction.

According to this aspect of the present invention, the fluid ejected into the yarn running space of the yarn processing apparatus is discharged from the yarn running space and then collides with the fluid guide portion. Most of the fluid colliding with the fluid guide portion flows in the guide direction along the fluid guide portion, and flows into the exhaust chamber through the inlet. Because part of the inner wall of the exhaust chamber has the at least one curved portion, the fluid flowing into the exhaust chamber becomes a swirling flow in the exhaust chamber, and hence the fluid predominantly flows toward the inside of the exhaust chamber, at around the inlet. As a result, the oil mist flowing into the exhaust chamber together with the fluid does not easily flow out through the inlet, and hence the dispersion of the oil mist scattering from the yarn processing apparatus is effectively suppressed.

The present invention is preferably arranged so that the exhaust port is formed at one end portion of the exhaust chamber in the third direction.

This arrangement facilitates, in the exhaust chamber, the formation of a flow of the fluid toward the one end portion in the third direction, where the exhaust port is provided. As a result,, a three-dimensional swirling flow moves toward the exhaust port in a spiral manner. On this account, the oil mist is further efficiently discharged from the exhaust port together with the fluid.

The present invention is preferably arranged such that the at least one curved portion is provided on each of the respective sides of the inlet in the first direction.

Because this arrangement further facilitates the formation of a swirling flow in the exhaust chamber, it is possible to further effectively suppress the flow-out of the fluid from the exhaust chamber through the inlet.

The present invention is preferably arranged so that the at least one fluid guide portion is provided on each of the respective sides of the at least one yarn running space in the first direction, the exhaust chamber is divided into a first exhaust chamber on one side in the first direction and a second exhaust chamber on the other side in the first direction, and the inlet and the exhaust port are formed in each of the first exhaust chamber and the second exhaust chamber.

With this arrangement, streams of the fluid discharged from the respective sides of the yarn running space are not merged in the exhaust chamber and flow into the first exhaust chamber and the second exhaust chamber, respectively, and are discharged from the exhaust port. The disturbance of flows in the first exhaust chamber and the second exhaust chamber is suppressed, and the formation of a flow toward the exhaust port is further facilitated.

The present invention is preferably arranged so that at least one flow-out suppression portion which protrudes inward from the inner wall of the exhaust chamber in a cross section orthogonal to the third direction is provided in order to suppress the fluid in the exhaust chamber from flowing out through the inlet.

Because the at least one flow-out suppression portion is provided, the suppression of the fluid having flowed into the exhaust chamber from flowing out from the exhaust chamber through the inlet is further ensured. It is therefore possible to further effectively suppress the dispersion of the oil mist scattered from the yarn processing apparatus.

The present invention is preferably arranged such that the at least one flow-out suppression portion protrudes in a direction having a component in the guide direction and a component toward the imaginary line.

With this arrangement, when the fluid in the exhaust chamber collides with the flow-out suppression portion, the fluid tends to flow in the direction having the component in the guide direction of the flow-out suppression portion, i.e., in the direction toward the inside of the exhaust chamber. It is therefore possible to further effectively suppress the flow-out of the fluid from the exhaust chamber through the inlet.

The present invention is preferably arranged such that the at least one flow-out suppression portion is provided on each of the respective sides of the inlet in the first direction.

Because the flow-out suppression portions are provided on the respective sides of the inlet, the flow-out of the fluid from the exhaust chamber through the inlet is further effectively suppressed.

The present invention is preferably arranged such that a groove portion that is convex downward is formed by the inner wall of the exhaust chamber and the at least one flow-out suppression portion.

With this arrangement, the oil droplets made from the oil mist in the exhaust chamber are collected by the groove portion, and hence the contamination of the apparatus and the yarn by the oil droplets is avoided.

The present invention is preferably arranged so that the at least one flow-out suppression portion is integrated with the cover member.

With this arrangement, the total number of components is reduced and mounting of the flow-out suppression portion is unnecessary.

The present invention is preferably arranged so that a protruding portion is provided to oppose the yarn processing unit over the at least one fluid guide portion in the cross section orthogonal to the third direction, and the protruding portion protrudes from the base end of the flow-out suppression portion in a direction having a component in a direction opposite to the guide direction and a component toward the imaginary line.

With this arrangement, even if part of the fluid discharged from the yarn running space is not guided to the exhaust chamber by the fluid guide portion and flows outside the fluid guide portion, such part of fluid is guided to the exhaust chamber by the protruding portion. It is therefore possible to further effectively suppress the dispersion of the oil mist.

The present invention is preferably arranged so that the protruding portion is integrated with the cover member.

With this arrangement, the total number of components is reduced and mounting of the protruding portion is unnecessary.

The present invention is preferably arranged so that the yarn processing apparatus includes a base that supports the yarn processing unit and the at least one fluid guide portion, and the at least one fluid guide portion rises from the base in the guide direction.

With this arrangement, the fluid discharged from the yarn running space and colliding with the fluid guide portion is blocked by the base, and hence the fluid tends to be guided to the exhaust chamber. It is therefore possible to further effectively suppress the dispersion of the oil mist.

The present invention is preferably arranged so that a guide groove in which the yarn is inserted is formed in the at least one fluid guide portion.

According to this arrangement, because the fluid guide portion can be used as the yarn regulating member, an increase in number of components is suppressed.

The present invention is preferably arranged so that plural yarn running spaces are formed in the yarn processing unit to be aligned in the third direction, and the inlet is formed across a range in which the plural yarn running spaces are formed to be aligned in the third direction.

Such a yarn processing apparatus is able to simultaneously perform a predetermined process for plural yarns. Furthermore, because the inlet is formed to be wide, the fluid discharged from the plural yarn running spaces are efficiently taken into the exhaust chamber, with the result that the dispersion of the oil mist is effectively suppressed.

A spun yarn take-up apparatus of the present invention comprises: an oil applicator which is configured to apply oil to the yarn; and any one of the yarn processing mechanisms described above, which is provided on the downstream side of the oil applicator in the yarn running direction.

As described above, such a spun yarn take-up apparatus is able to effectively suppress the dispersion of oil mist scattered from the yarn processing apparatus.

### BRIEF DESCRIPTION OF THE DRAWINGS

FIG. 1 is a schematic diagram of a spun yarn take-up apparatus including a yarn processing mechanism according to the present embodiment.
FIG. 2 is a perspective view of an interlacing device.
FIG. 3 is a perspective view showing the appearance of the yarn processing mechanism.
FIG. 4 is a cross section of the yarn processing mechanism.
FIG. 5 shows a fluid analysis result indicating the flow of fluid in the yarn processing mechanism.
FIG. 6 shows a fluid analysis result indicating the flow of fluid in a yarn processing mechanism of each modification.
FIG. 7 shows a fluid analysis result indicating the flow of fluid in a yarn processing mechanism of a comparative example.

### DESCRIPTION OF THE PREFERRED EMBODIMENTS

### (Spun Yarn Take-Up Apparatus)

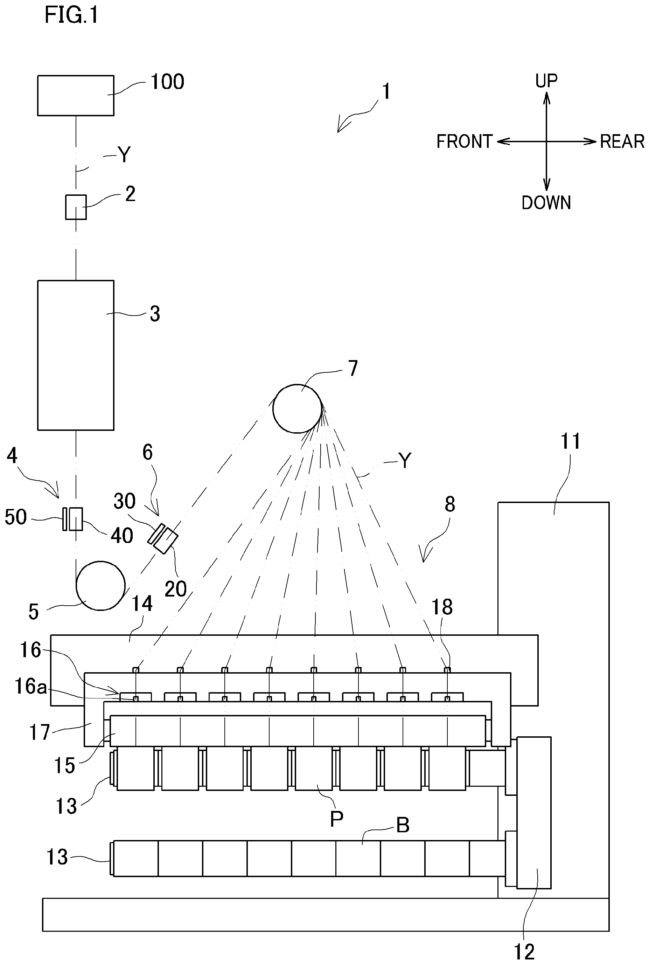

The following will describe an embodiment of the present invention. FIG. 1 is a schematic diagram of a spun yarn take-up apparatus including a yarn processing mechanism according to the present embodiment. Hereinafter, upward, downward, frontward, and rearward directions shown in FIG. 1 will be referred to as upward, downward, frontward, and rearward directions of the spun yarn take-up apparatus 1.

The spun yarn take-up apparatus 1 takes up synthetic fiber yarns Y spun out from a spinning apparatus 100 and forms packages P by winding the yarns Y onto bobbins B. The spun yarn take-up apparatus 1 includes an oil guide 2 (equivalent to an oil applicator of the present invention), a drawing device 3, a first yarn processing mechanism 4, a first take-up roller 5, a second yarn processing mechanism 6, a second take-up roller 7, and a winding device 8. From the spinning apparatus 100, polymer which is supplied from a polymer supplier (not illustrated) formed of a gear pump or the like is pushed out downward through an unillustrated spinneret.

The yarns Y spun out from the spinning apparatus 100 run on a yarn path extending along the oil guide 2, the drawing device 3, the first yarn processing mechanism 4, the first take-up roller 5, the second yarn processing mechanism 6, and the second take-up roller 7, while being lined up in a direction orthogonal to the sheet of FIG. 1. The yarns Y are then distributed in the front-rear direction from the second take-up roller 7, and are wound onto bobbins B at the winding device 8.

To the yarns Y spun out from the spinning apparatus 100, oil is applied at the oil guide 2. The yarns Y are then sent to the drawing device 3. While in the present embodiment the oil guide 2 is provided between the spinning apparatus 100 and the drawing device 3 in the yarn running direction, the oil guide 2 may be provided at any position upstream of the first yarn processing mechanism 4. The drawing device 3 is arranged so that unillustrated heating rollers are accommodated in a heat retaining box. By using the heating rollers, the drawing device 3 draws the yarns Y spun out from the spinning apparatus 100, while heating them. The yarns Y drawn by the drawing device 3 are sent to the winding device 8 by the first take-up roller 5 and the second take-up roller 7.

The first yarn processing mechanism 4 includes a migration nozzle 40 (equivalent to a yarn processing apparatus of the present invention) and a cover member 50. The migration nozzle 40 is more or less structurally identical with an interlacing device 20 that is detailed later, and is configured to uniformize the oil on the yarns Y by ejecting compressed air with pressure lower than that of the interlacing device 20. The second yarn processing mechanism 6 includes the interlacing device 20 (equivalent to the yarn processing apparatus of the present invention) and a cover member 30. The interlacing device 20 is configured to interlace the yarns Y by ejecting compressed air with high pressure. Because the first yarn processing mechanism 4 and the second yarn processing mechanism 6 are structurally identical, the following will detail only the second yarn processing mechanism 6. The positions of the first yarn processing mechanism 4 and the second yarn processing mechanism 6 may be suitably changed as long as the second yarn processing mechanism 6 is provided on the downstream side of the first yarn processing mechanism 4 in the yarn running direction. Because it is not always necessary to provide both of the first yarn processing mechanism 4 and the second yarn processing mechanism 6 as in the present embodiment, only one of these mechanisms may be provided.

The winding device 8 includes members such as a mount 11, a turret 12, two bobbin holders 13, a supporting frame 14, a contact roller 15, and a traverse unit 16. The winding device 8 simultaneously winds the yarns Y sent from the second take-up roller 7 onto the bobbins B by rotating the bobbin holder 13, so as to form packages P.

The disc-shaped turret 12 is attached to the mount 11. The turret 12 is rotationally driven by a motor which is not illustrated. The two long cylindrical bobbin holders 13 are cantilevered by the turret 12. These bobbin holders extend in the front-rear direction. To each bobbin holder 13, bobbins B are attached along the axial direction (front-rear direction) to be side by side. The two bobbin holders 13 at an upper winding position and a lower retracted position are replaceable by each other as the turret 12 rotates.

The supporting frame 14 extends in the front-rear direction and has a rear end portion that is fixed to the mount 11. A roller supporting member 17 that extends in the front-rear direction is attached to a lower portion of the supporting frame 14 so as to be vertically movable relative to the supporting frame 14. The roller supporting member 17 supports the contact roller 15 in a rotatable manner. The contact roller 15 extends in the front-rear direction. As this contact roller 15 applies predetermined contact pressure to each package P, the shape of the package P is adjusted.

The roller supporting member 17 is provided with the traverse unit 16. The traverse unit 16 includes traverse guides 16a that are lined up in the front-rear direction. The traverse guides 16a are driven by a motor (not illustrated) and are configured to reciprocate in the front-rear direction. As each traverse guide 16a to which the yarn Y is threaded reciprocates, the yarn Y is wound onto the corresponding bobbin B while being traversed about a fulcrum guide 18.

### (Interlacing Device)

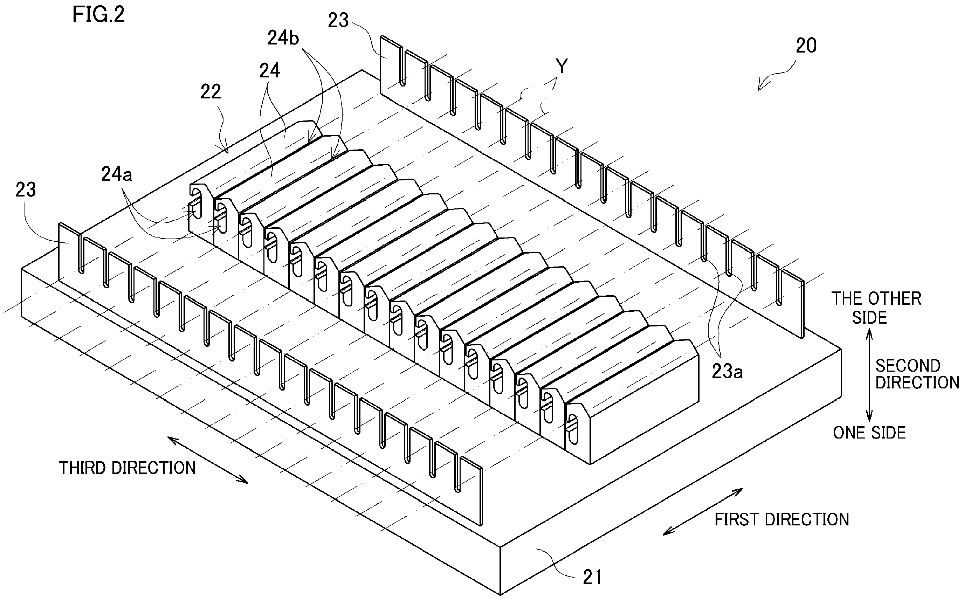

FIG. 2 is a perspective view of the interlacing device 20. The first direction indicates a direction in which a later-described yarn running space 24a penetrates. To put it differently, the yarn running space 24a is formed to extend along the first direction. The second direction is a direction orthogonal to the first direction. The third direction is a direction orthogonal to the first direction and the second direction and is a direction in which plural yarn running spaces 24a are aligned.

The interlacing device 20 is configured to interlace yarns Y by using compressed air. The interlacing device 20 includes a base 21, a yarn processing unit 22, and two yarn regulating members 23 (equivalent to a fluid guide portion of the present invention). The base 21 supports the yarn processing unit 22 and the yarn regulating members 23 at one end in the second direction. In the base 21, a passage (not illustrated) is formed for supplying compressed air to the yarn processing unit 22.

In the yarn processing unit 22, yarn processing blocks 24 are aligned in the third direction. In each yarn processing block 24, the yarn running space 24a is formed along the first direction. The yarn Y runs inside the yarn running space 24a. Above a part between neighboring yarn processing blocks 24, a yarn insertion path 24b is provided to allow the yarn Y to be inserted into the yarn running space 24a. At a central part of the yarn processing block 24 in the first direction, an injection port (not illustrated) is formed to inject compressed air to the yarn running space 24a. As the yarn Y running in the yarn running space 24a is effected by the compressed air ejected from the injection port, the yarn Y is interlaced. The ejected compressed air is discharged as streams from the both ends of the yarn running space 24a.

The two yarn regulating members 23 are provided on the respective sides of the yarn processing unit 22 in the first direction to be spaced apart from the yarn processing unit 22. Each yarn regulating member 23 is a plate-shaped member that rises from the base 21 toward the other side in the second direction and extends in the third direction. In the yarn regulating member 23, guide grooves 23a are formed at regular intervals in the third direction. Each guide groove 23a is a slit that opens upward. As each yarn Y is inserted into the corresponding guide groove 23a, the yarn paths of the yarns Y are determined in the interlacing device 20. In the present embodiment, the guide direction that is the direction in which the yarn regulating member 23 extends (rises) from the base 21 is identical with the direction toward the other side in the second direction. Alternatively, the guide direction of the yarn regulating member 23 may be tilted relative to the second direction as long as the guide direction has a component extending towards the other side in the second direction.

### (Yarn Processing Mechanism)

In the interlacing device 20 arranged as described above, as compressed air (an example of fluid of the present invention; hereinafter, the compressed air will be referred to as fluid) is ejected, part of oil adhering to the yarns Y is blown out and becomes oil mist. When such oil mist scatters from the interlacing device 20 as a stream from the yarn running space 24a, the oil mist may adhere to a resin member and deteriorate the resin member, or the oil mist may adhere to the yarns Y or the packages P in the form of oil droplets and may deteriorate the yarn quality. For this reason, the second yarn processing mechanism 6 is provided with the cover member 30 with which the oil mist scattering from the interlacing device 20 is efficiently collected and the dispersion of the oil mist is suppressed. While described below is the cover member 30 of the second yarn processing mechanism 6 (hereinafter, this mechanism is simply referred to as a yarn processing mechanism 6), the cover member 50 of the first yarn processing mechanism 4 have the same structure.

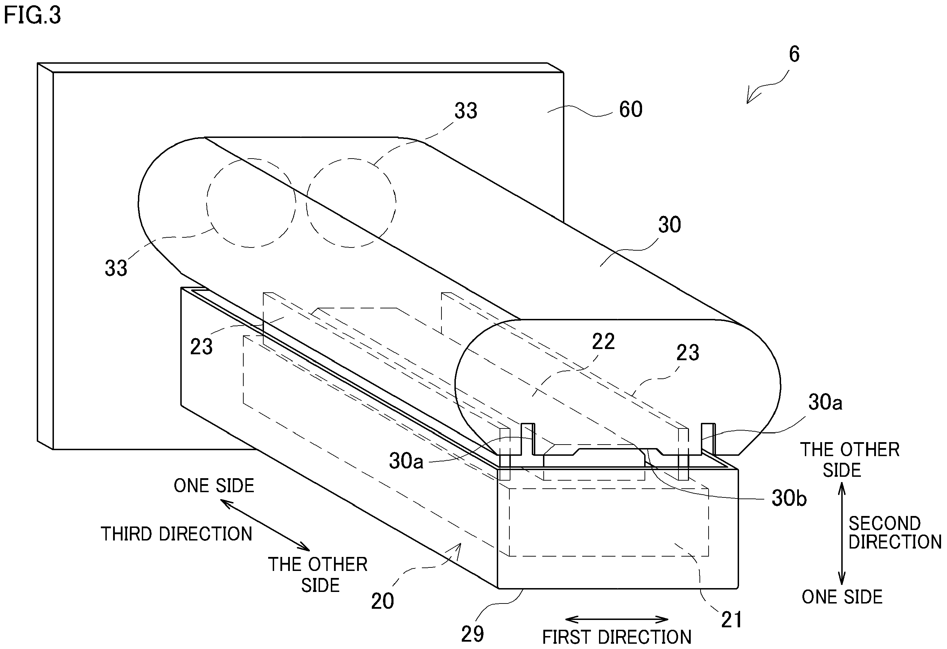

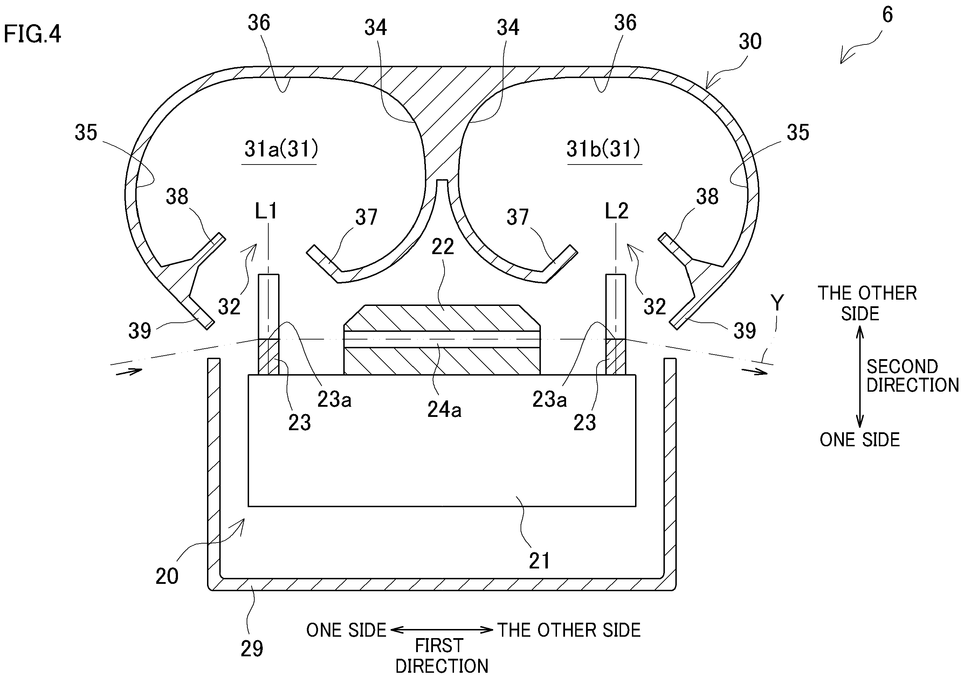

FIG. 3 is a perspective view showing the appearance of the yarn processing mechanism 6. FIG. 4 is a cross section of the yarn processing mechanism 6, to be more specific, is a cross section orthogonal to the third direction. As shown in FIG. 3, the yarn processing mechanism 6 includes the interlacing device 20, a housing 29, and the cover member 30. The housing 29 is a box-shaped member accommodating the interlacing device 20, and is open on the other side in the second direction. An end portion on one side in the third direction of the housing 29 is fixed to, for example, an unillustrated frame of the spun yarn take-up apparatus 1 by means of a supporter 60.

As shown in FIG. 4, the cover member 30 is provided on the other side of the interlacing device 20 in the second direction and covers the interlacing device 20. There is a gap between the housing 29 and the cover member 30 to allow the yarn Y interlaced at the interlacing device 20 to pass therethrough. The cover member 30 extends in the third direction and an exhaust chamber 31 is formed inside the cover member 30 to extend in the third direction. The exhaust chamber 31 of the present embodiment is divided into a first exhaust chamber 31a opposing the yarn regulating member 23 that is on the upstream side in the yarn running direction and a second exhaust chamber 31b opposing the yarn regulating member 23 that is on the downstream side in the yarn running direction. To put it differently, the exhaust chamber 31 is divided into the first exhaust chamber 31a on one side in the first direction and the second exhaust chamber 31b on the other side in the first direction. Hereinafter, each of the first exhaust chamber 31a and the second exhaust chamber 31b will be simply referred to as an exhaust chamber 31 when it is unnecessary to discern these chambers.

An inlet 32 is formed on one side in the second direction of the exhaust chamber 31, whereas an exhaust port 33 (see FIG. 3) is formed at an end portion on one side in the third direction of the exhaust chamber 31. The inlet 32 of the first exhaust chamber 31a is formed on an imaginary line L1 extending in the guide direction of the yarn regulating member 23 from the base end of the yarn regulating member 23 that is on the upstream side in the yarn running direction. The inlet 32 of the second exhaust chamber 31b is formed on an imaginary line L2 extending in the guide direction of the yarn regulating member 23 from the base end of the yarn regulating member 23 that is on the downstream side in the yarn running direction. The inlet 32 is formed across the range in which the yarn running spaces 24a are formed in the third direction.

The inlet 32 is formed at a central portion of the exhaust chamber 31 in the first direction. In a cross section orthogonal to the third direction, the inner wall of the exhaust chamber 31 is substantially elliptic in shape, and has curved portions 34 and 35 that are on the respective sides of the inlet 32 in the first direction. Each of the curved portions 34 and 35 is curved to be convex outward in a cross section orthogonal to the third direction. The curved portions 34 and 35 are connected to a linear portion 36 on the other side in the second direction.

At the ends of the curved portions 34 and 35, which are opposite to the side connected to the linear portion 36, flow-out suppression portions 37 and 38 are formed to protrude toward the inside of the exhaust chamber 31. Each of the flow-out suppression portions 37 and 38 protrudes from the inner wall of the exhaust chamber 31 in a direction having a component in the guide direction of the yarn regulating member 23 (a component toward the other side in the second direction in the present embodiment) and a component toward the imaginary line L1 (L2). An opening portion between the leading end of the flow-out suppression portion 37 and the leading end of the flow-out suppression portion 38 is equivalent to the inlet 32.

In the cover member 30, each of protruding portions 39 is formed to oppose the yarn processing unit 22 over the yarn regulating member 23 in a cross section orthogonal to the third direction. Each protruding portion 39 protrudes from the base end of the flow-out suppression portion 38 in a direction having a component opposite to the guide direction (a component toward one side in the second direction in the present embodiment) and a component toward the imaginary line L1 (L2).

The exhaust port 33 provided at the end portion on one side in the third direction of each of the first exhaust chamber 31a and the second exhaust chamber 31b is connected to an unillustrated exhaust duct. With this arrangement, fluid flowing into the exhaust chamber 31 from the inlet 32 can be discharged through the exhaust port 33. The exhaust duct connected to the exhaust port 33 may be open to the atmospheric air or may be connected to a suction device. The end portion on the other side in the third direction of the cover member 30 is closed.

When the cover member 30 is provided to cover the interlacing device 20, it is difficult to perform yarn threading to the interlacing device 20. For this reason, in the present embodiment, an unillustrated movement mechanism is provided to move the cover member 30 to one side in the third direction. When the cover member 30 is moved to the far side of the supporter 60, the interlacing device 20 becomes open and yarn threading thereto can be easily done. Parts of the yarn processing unit 22 and the yarn regulating members 23 protrude from the opening of the housing 29, and disadvantageously interfere with the end face on the other side in the third direction of the cover member 30 when the cover member 30 is moved. In this connection, as shown in FIG. 3, a cutout 30a for avoiding interference with the yarn regulating member 23 and a cutout 30b for avoiding interference with the yarn processing unit 22 are formed in the end face on the other side in the third direction of the cover member 30. However, the specific arrangement for moving the cover member 30 is not limited to the above-described arrangement. The yarn threading may be facilitated by arranging the cover member 30 to be easily detachable.

### (Fluid Analysis Result)

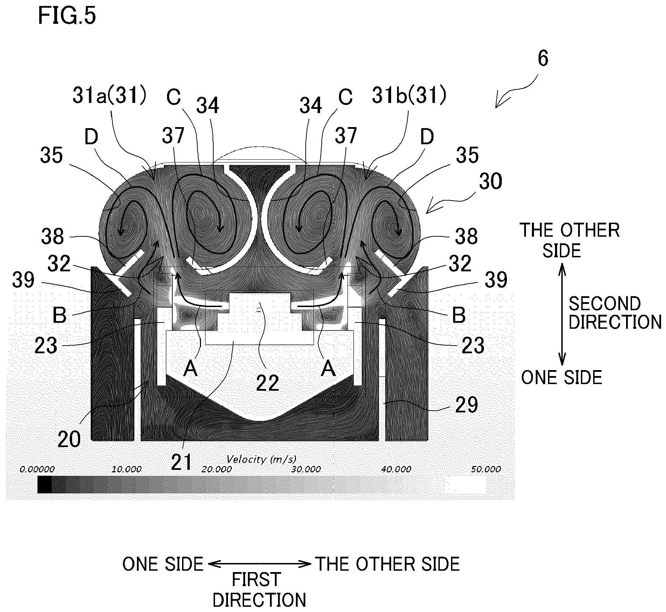

FIG. 5 shows a fluid analysis result indicating the flow of fluid in the yarn processing mechanism 6. The following will describe the flow of fluid in the yarn processing mechanism 6 with reference to FIG. 5.

Fluid ejected into the yarn running space 24a of the yarn processing unit 22 is discharged from the both sides of the yarn running space 24a and reaches the yarn regulating member 23. Most of the fluid having reached the yarn regulating member 23 collides with the yarn regulating member 23 and flows toward the other side in the second direction along the yarn regulating member 23. As a result, the most of the fluid flows into the exhaust chamber 31 through the inlet 32 (see the arrow A). As such, because the yarn regulating member 23 is used as a member for guiding the fluid to the exhaust chamber 31, most of the fluid discharged from the yarn processing unit 22 flows into the exhaust chamber 31.

Meanwhile, part of the fluid having reached the yarn regulating member 23 passes through the guide grooves 23a of the yarn regulating member 23. Part of the fluid having passed through the guide grooves 23a is guided to the inlet 32 by the protruding portion 39 of the cover member 30 and the flow-out suppression portion 38, with the result that the part of the fluid flows into the exhaust chamber 31 through the inlet 32 (see the arrow B). The fluid having passed through the guide grooves 23a tends to flow to the outside through the gap between the housing 29 and the cover member 30. By providing the protruding portion 39, this flow-out of the fluid to the outside can be suppressed.

The fluid having flowed into the exhaust chamber 31 collides with the inner wall of the exhaust chamber 31, and is then branched into a stream (see the arrow C) toward the curved portion 34 and a stream (see the arrow D) toward the curved portion 35. These streams are swirling flows because they flow along the curved portions 34 and 35. Furthermore, because of the presence of the flow-out suppression portions 37 and 38, the swirling flows do not easily flow out from the inlet 32, and hence the swirling flows are stably formed inside the exhaust chamber 31. Because the exhaust port 33 is provided at the end portion on one side in the third direction of the exhaust chamber 31, the three-dimensional swirling flows move toward the exhaust port 33 in a spiral manner, and hence the exhaust from the exhaust port 33 is facilitated.

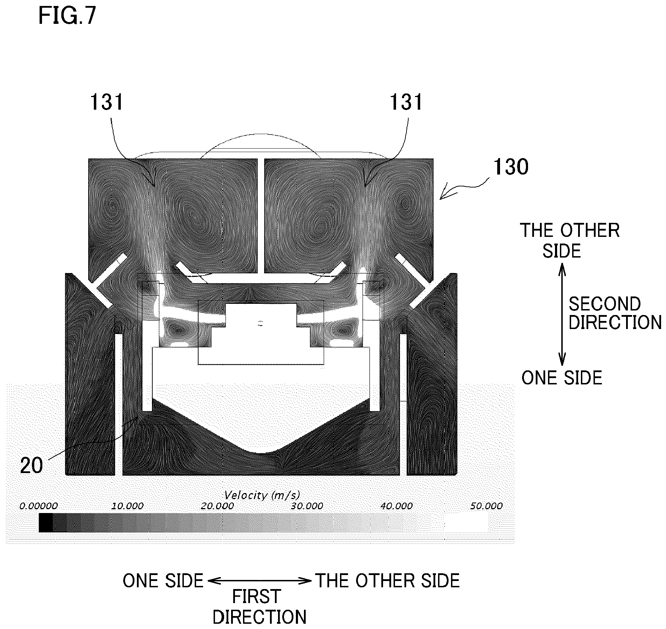

AS described above, the yarn processing mechanism 6 has the arrangements with which most of the fluid ejected into the yarn running space 24a of the yarn processing unit 22 reaches the exhaust chamber 31 and the fluid having flowed into the exhaust chamber 31 does not escape from the exhaust chamber 31. As a result, a large amount of oil mist is taken into the exhaust chamber 31 together with a large amount of fluid, and exhausted from the exhaust port 33. The dispersion of the oil mist is therefore effectively suppressed. According to the fluid analysis result, when the inner wall of the exhaust chamber 131 was arranged to be rectangular in shape in a cross section orthogonal to the third direction and no curved portion was provided as in the cover member 130 of a comparative example shown in FIG. 7, the rate of collection of fluid from the exhaust port 33 was 86.2%. Meanwhile, in the present embodiment in which the curved portions 34 and 35 are provided, the rate of collection of the fluid in the present embodiment is significantly improved , i.e., 99.0%.

### (Effects)

In the yarn processing mechanism 6, the fluid ejected into the yarn running space 24a of the interlacing device 20 (yarn processing apparatus) is discharged from the yarn running space 24a and then collides with the yarn regulating member 23 (fluid guide portion). Most of the fluid colliding with the yarn regulating member 23 flows in the guide direction of the yarn regulating member 23 along the yarn regulating member 23, and flows into the exhaust chamber 31 through the inlet 32. Because parts of the inner wall of the exhaust chamber 31 have the curved portions 34 and 35, the fluid flowing into the exhaust chamber 31 becomes a swirling flow in the exhaust chamber 31, and hence the fluid predominantly flows toward the inside of the exhaust chamber 31, at around the inlet 32. As a result, the oil mist flowing into the exhaust chamber 31 together with the fluid does not easily flow out through the inlet 32, and hence the dispersion of the oil mist scattering from the interlacing device 20 is effectively suppressed.

In the present embodiment, the exhaust port 33 is formed at one end portion of the exhaust chamber 31 in the third direction. This arrangement facilitates, in the exhaust chamber 31, the formation of a flow of the fluid toward the one end portion in the third direction, where the exhaust port 33 is provided. As a result,, a three-dimensional swirling flow moves toward the exhaust port 33 in a spiral manner. On this account, the oil mist is further efficiently discharged from the exhaust port 33 together with the fluid.

In the present embodiment, the curved portions 34 and 35 are provided on the respective sides of the inlet 32 in the first direction. Because this arrangement further facilitates the formation of a swirling flow in the exhaust chamber 31, it is possible to further effectively suppress the flow-out of the fluid from the exhaust chamber 31 through the inlet 32.

In the present embodiment, the yarn regulating members 23 are provided on the respective sides of the yarn running space 24a in the first direction, the exhaust chamber 31 is divided into the first exhaust chamber 31a on one side in the first direction and the second exhaust chamber 31b on the other side in the first direction, and the inlet 32 and the exhaust port 33 are formed in each of the first exhaust chamber 31a and the second exhaust chamber 31b. With this arrangement, streams of the fluid discharged from the respective sides of the yarn running space 24a are not merged in the exhaust chamber 31 and flow into the first exhaust chamber 31a and the second exhaust chamber 31b, respectively, and are discharged from the exhaust port 33. Consequently, the disturbance of flows in the first exhaust chamber 31a and the second exhaust chamber 31b is suppressed, and the formation of a flow toward the exhaust port 33 is further facilitated.

In the present embodiment, a flow-out suppression portion 37, 38, which protrudes inward from the inner wall of the exhaust chamber 31 in a cross section orthogonal to the third direction, is provided in order to suppress the fluid in the exhaust chamber 31 from flowing out through the inlet 32. Because the flow-out suppression portion 37, 38,is provided, the suppression of the fluid having flowed into the exhaust chamber 31 from flowing out from the exhaust chamber 31 through the inlet 32 is further ensured. It is therefore possible to further effectively suppress the dispersion of the oil mist scattered from the interlacing device 20.

In the present embodiment, the flow-out suppression portions 37 and 38 protrude in the direction having the component in the guide direction of the yarn regulating member 23 and the component toward the imaginary line L1 (L2). With this arrangement, when the fluid in the exhaust chamber 31 collides with the flow-out suppression portions 37 and 38, the fluid tends to flow in the direction having the component in the guide direction of the flow-out suppression portions 37 and 38, i.e., in the direction toward the inside of the exhaust chamber 31. It is therefore possible to further effectively suppress the flow-out of the fluid from the exhaust chamber 31 through the inlet 32.

In the present embodiment, the flow-out suppression portions 37 and 38 are provided on the respective sides of the inlet 32 in the first direction. Because the flow-out suppression portions 37 and 38 are provided on the respective sides of the inlet 32, the flow-out of the fluid from the exhaust chamber 31 through the inlet 32 is further effectively suppressed.

In the present embodiment, for example, it is preferable that the cover member 30 is provided so that one side in the second direction corresponds to the lower side in the vertical direction and the other side in the second direction corresponds to the upper side in the vertical direction in FIG. 4, and the inner wall of the exhaust chamber 31 and each of the flow-out suppression portions 37 and 38 form a groove portion that is shaped to be convex downward. With this arrangement, the oil droplets made from the oil mist in the exhaust chamber 31 are collected by the groove portion, and hence the contamination of the apparatus and the yarns Y by the oil droplets is avoided. In this regard, the cover member 30 may not be provided at the position described above.

In the present embodiment, the flow-out suppression portions 37 and 38 are integrated with the cover member 30. With this arrangement, the total number of components is reduced and mounting of the flow-out suppression portions 37 and 38 is unnecessary.

In the present embodiment, each of the protruding portions 39 is provided to oppose the yarn processing unit 22 over the yarn regulating member 23 in the cross section orthogonal to the third direction. The protruding portion 39 protrudes from the base end of the flow-out suppression portion 38 in a direction having a component in a direction opposite to the guide direction and a component toward the imaginary line L1 (L2). With this arrangement, even if part of the fluid discharged from the yarn running space 24a is not guided to the exhaust chamber 31 by the yarn regulating member 23 and flows outside the yarn regulating member 23, such part of fluid is guided to the exhaust chamber 31 by the protruding portion 39. It is therefore possible to further effectively suppress the dispersion of the oil mist.

In the present embodiment, the protruding portion 39 is integrated with the cover member 30. With this arrangement, the total number of components is reduced and mounting of the protruding portion 39 is unnecessary.

In the present embodiment, the interlacing device 20 has the base 21 that supports the yarn processing unit 22 and the yarn regulating members 23, and each yarn regulating member 23 rises in the guide direction from the base 21. With this arrangement, the fluid discharged from the yarn running space 24a and colliding with the yarn regulating member 23 is blocked by the base 21, and hence the fluid tends to be guided to the exhaust chamber 31. It is therefore possible to further effectively suppress the dispersion of the oil mist.

In the present embodiment, in the fluid guide portion (yarn regulating member 23), guide grooves 23a are formed to allow the yarns Y to be inserted into the same. According to this arrangement, because the fluid guide portion can be used as the yarn regulating member 23, an increase in the number of components is suppressed.

In the present embodiment, plural yarn running spaces 24a are formed in the yarn processing unit 22 to be aligned in the third direction, and the inlet 32 is formed across the range in which the yarn running spaces 24a are formed in the third direction. Such an interlacing device 20 is able to simultaneously perform a predetermined process for plural yarns Y. Furthermore, because the inlet 32 is formed to be wide, the fluid discharged from the plural yarn running spaces 24a are efficiently taken into the exhaust chamber 31, with the result that the dispersion of the oil mist is effectively suppressed.

### (Other Embodiments)

The following will describe modifications of the above-described embodiment.

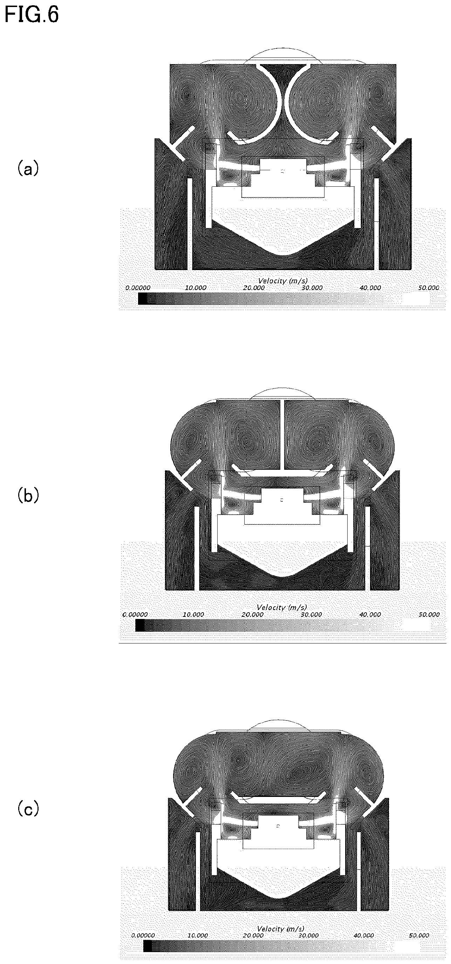

In the embodiment above, the curved portions 34 and 35 that are convex outward are provided on the inner wall of the exhaust chamber 31, on the respective sides of the inlet 32 in the first direction. Alternatively, a curved portion may be provided on only one side of the inlet 32 in the first direction. In modifications whose analysis results are shown in FIG. 6(a) and 6(b), the rate of collection of fluid was good, i.e., 91.8% in the modification of FIG. 6(a) and the rate of collection of fluid was also good, i.e., 89.7% in the modification of FIG. 6(b), even though the curved portion was provided only on one side.

In the embodiment above, the exhaust chamber 31 is divided into the first exhaust chamber 31a and the second exhaust chamber 31b. Alternatively, as in a modification whose analysis result is shown in FIG. 6(c), the first exhaust chamber 31a and the second exhaust chamber 31b may be integrated. Although a swirling flow tended to be disturbed in the exhaust chamber 31, the rate of collection of fluid was good, i.e., 93.1%.

In the embodiment above, the flow-out suppression portions 37 and 38 are provided on the respective sides of the inlet 32 in the first direction. Alternatively, a flow-out suppression portion may be provided on only one side of the inlet 32 in the first direction, or no flow-out suppression portion may be provided.

In the embodiment above, the exhaust port 33 is formed at one end portion of the exhaust chamber 31 in the third direction. Alternatively, exhaust ports may be provided at both end portions of the exhaust chamber 31 in the third direction, or an exhaust port may be provided at a different part.

In the embodiment above, the yarn regulating member 23 and the exhaust chamber 31 having the inlet 32 and the exhaust port 33 are provided on each side of the yarn processing unit 22 in the first direction. Alternatively, a yarn regulating member 23 and an exhaust chamber 31 may be provided only on one side of the yarn processing unit 22 in the first direction. In this case, the yarn regulating member 23 and the exhaust chamber 31 are preferably provided on the downstream side of the yarn processing unit 22 in the yarn running direction. This is because, on the downstream side of the yarn processing unit 22 in the yarn running direction, fluid including oil mist discharged from the yarn running space 24a tends to flow out through the gap between the housing 29 and the cover member 30, together with an accompanied flow generated by the running of the yarn Y. Alternatively, only one exhaust chamber 31 and only one exhaust port 33 may be provided, whereas an inlet 32 may be provided on each side of the yarn processing unit 22 in the first direction.

In the embodiment above, the flow-out suppression portions 37 and 38 are integrated with the cover member 30. Alternatively, the flow-out suppression portions 37 and 38 may be members independent from the cover member 30.

In the embodiment above, the protruding portion 39 is integrated with the cover member 30. Alternatively, the protruding portion 39 may be a member independent from the cover member 30. The protruding portion 39 is not a prerequisite member, and the protruding portion 39 may be omitted.

In the embodiment above, the yarn regulating members 23 rise from the base 21. In this regard, the yarn regulating members 23 may not rise from the base 21, and may be provided in a different way. When the base 21 is omitted, the fluid discharged from the yarn running space 24a flows toward the opposite side of the cover member 30 along the yarn regulating members 23. Even in this case, the effect of suppressing the dispersion of the oil mist is obtained. In this case, a protrusion is preferably provided on each yarn regulating member 23 in order to suppress the fluid from flowing toward the other side of the cover member 30 along the yarn regulating member 23. Alternatively, the shape of the cover member 30 may be changed so that the yarn regulating members 23 are covered by the cover member 30 on one side in the second direction. Alternatively, the cover member 30 may be provided on the respective sides of the yarn regulating members 23 in the second direction.

In the embodiment above, the yarn regulating members 23 provided on the interlacing device 20 (yarn processing apparatus) are used as fluid guide portions of the present invention. Alternatively, a fluid guide portion may be provided in addition to the yarn regulating members 23, or a fluid guide portion may be provided separately from the interlacing device 20. For example, a portion may be provided to the cover member 30 to guide fluid discharged from the yarn running space 24a to the inlet 32 of the exhaust chamber 31, , and this part may function as a fluid guide portion.

In the embodiment above, the interlacing device 20 and the migration nozzle 40 which are equivalent to the yarn processing apparatus of the present invention perform a predetermined process for plural yarns Y. Alternatively, the yarn processing apparatus may perform a predetermined process for one yarn Y.

In the embodiment above, the spun yarn take-up apparatus 1 includes the drawing device 3. On the other hand, , the present invention may be applied to a spun yarn take-up apparatus that does not include a drawing device 3.

## Claims

1. A yarn processing mechanism (6) comprising:
a yarn processing apparatus (20) which includes a yarn processing unit (22) in which at least one yarn running space (24a) is formed along a first direction to allow a yarn (Y) to which oil is applied runs through the yarn running space (24a), and which is configured to perform a predetermined process for the yarn (Y) by ejecting fluid into the yarn running space (24a);
at least one fluid guide portion (23) which is provided to be spaced apart from the yarn processing unit (22) in the first direction and which extends in a guide direction having a component in a second direction orthogonal to the first direction; and
a cover member (30) in which an exhaust chamber (31) extends in a third direction that is orthogonal to the first direction and the second direction, the exhaust chamber (31) having an inlet (32) formed on an imaginary line (L1, L2) extending in the guide direction from a base end of the at least one fluid guide portion (23) and an exhaust port (33) formed at a different position from the inlet (32),an inner wall of the exhaust chamber (31) having at least one curved portion (34, 35) which is convex outward in a cross section orthogonal to the third direction.

2. The yarn processing mechanism (6) according to claim 1, wherein, the exhaust port (33) is formed at one end portion of the exhaust chamber (31) in the third direction.

3. The yarn processing mechanism (6) according to claim 1 or 2, wherein, the at least one curved portion (34, 35) is provided on each of the respective sides of the inlet (32) in the first direction.

4. The yarn processing mechanism (6) according to any one of claims 1 to 3, wherein,
the at least one fluid guide portion (23) is provided on each of the respective sides of the at least one yarn running space (24a) in the first direction,
the exhaust chamber (31) is divided into a first exhaust chamber (31a) on one side in the first direction and a second exhaust chamber (31b) on the other side in the first direction, and
the inlet (32) and the exhaust port (33) are formed in each of the first exhaust chamber (31a) and the second exhaust chamber (31b).

5. The yarn processing mechanism (6) according to any one of claims 1 to 4, wherein, at least one flow-out suppression portion (37, 38) which protrudes inward from the inner wall of the exhaust chamber (31) in a cross section orthogonal to the third direction is provided in order to suppress the fluid in the exhaust chamber (31) from flowing out through the inlet (32).

6. The yarn processing mechanism (6) according to claim 5, wherein, the at least one flow-out suppression portion (37, 38) protrudes in a direction having a component in the guide direction and a component toward the imaginary line (L1, L2).

7. The yarn processing mechanism (6) according to claim 5 or 6, wherein, the at least one flow-out suppression portion (37, 38) is provided on each of the respective sides of the inlet (32) in the first direction.

8. The yarn processing mechanism (6) according to any one of claims 5 to 7, wherein, a groove portion that is convex downward is formed by the inner wall of the exhaust chamber (31) and the at least one flow-out suppression portion (37, 38).

9. The yarn processing mechanism (6) according to any one of claims 5 to 8, wherein, the at least one flow-out suppression portion (37, 38) is integrated with the cover member (30).

10. The yarn processing mechanism (6) according to any one of claims 5 to 9, wherein, a protruding portion (39) is provided to oppose the yarn processing unit (22) over the at least one fluid guide portion (23) in the cross section orthogonal to the third direction, and the protruding portion (39) protrudes from a base end of the flow-out suppression portion (38) in a direction having a component in a direction opposite to the guide direction and a component toward the imaginary line (L1, L2).

11. The yarn processing mechanism (6) according to claim 10, wherein, the protruding portion (39) is integrated with the cover member (30).

12. The yarn processing mechanism (6) according to any one of claims 1 to 11, wherein,
the yarn processing apparatus (20) includes a base (21) that supports the yarn processing unit (22) and the at least one fluid guide portion (23), and
the at least one fluid guide portion (23) rises from the base (21) in the guide direction.

13. The yarn processing mechanism (6) according to any one of claims 1 to 12, wherein, a guide groove (23a) in which the yarn (Y) is inserted is formed in the at least one fluid guide portion (23).

14. The yarn processing mechanism (6) according to any one of claims 1 to 13, wherein,
plural yarn running spaces (24a) are formed in the yarn processing unit (22) to be aligned in the third direction, and
the inlet (32) is formed across a range in which the yarn running spaces (24a) are formed to be aligned in the third direction.

15. A spun yarn take-up apparatus (1) comprising:
an oil applicator (2) which is configured to apply oil to the yarn (Y); and
the yarn processing mechanism (6) according to any one of claims 1 to 14, which is provided on the downstream side of the oil applicator (2) in the yarn running direction.
